(19) Europäisches Patentamt
European Patent Office
Office européen des brevets

(11) Veröffentlichungsnummer: **0 182 108**
**A1**

(12) # EUROPÄISCHE PATENTANMELDUNG

(21) Anmeldenummer: **85113277.9**

(22) Anmeldetag: **19.10.85**

(51) Int. Cl.⁴: **C 07 F 9/173**, A 01 N 57/12

(30) Priorität: **17.11.84 DE 3442143**

(43) Veröffentlichungstag der Anmeldung: **28.05.86 Patentblatt 86/22**

(84) Benannte Vertragsstaaten: **BE CH DE FR GB IT LI**

(71) Anmelder: **Degussa Aktiengesellschaft, Weissfrauenstrasse 9, D-6000 Frankfurt am Main 1 (DE)**

(72) Erfinder: **Huthmacher, Klaus, Dr. Dipl.-Chem., Lärchenweg 18, D-6460 Gelnhausen (DE)**
Erfinder: **Schmitt, Hermann, Berliner Strasse 24, D-6458 Rodenbach (DE)**

(54) **Phosphorsäureester.**

(57) O-1-Cyano-1-propenyl-thiophosphorsäureester der Formel

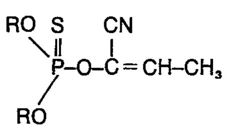

(I)

worin R eine Alkylgruppe mit 1–4 C-Atomen bedeutet.

Es werden Verfahren zur Herstellung dieser Verbindungen und ihre Verwendung in der Schädlingsbekämpfung beschrieben.

EP 0 182 108 A1

D e g u s s a Aktiengesellschaft

6000 Frankfurt am Main, Weissfrauenstraße 9

# Phosphorsäureester

Die vorliegende Erfindung betrifft O-1-Cyano-1-propenyl-thiophosphorsäureester, Verfahren zu ihrer Herstellung und ihre Verwendung in der Schädlingsbekämpfung. Die O-1-Cyano-1-propenyl-thiophosphorsäureester entsprechen der Formel

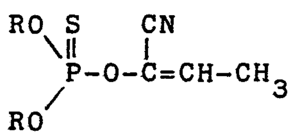

(I)

in der R eine gegebenenfalls verzweigte Alkylgruppe mit 1 - 4 C-Atomen, wobei 2 C-Atome bevorzugt sind, bedeutet.

Die Verbindungen der Formel I können nach an sich bekannten Methoden, z.B. wie folgt, hergestellt werden:

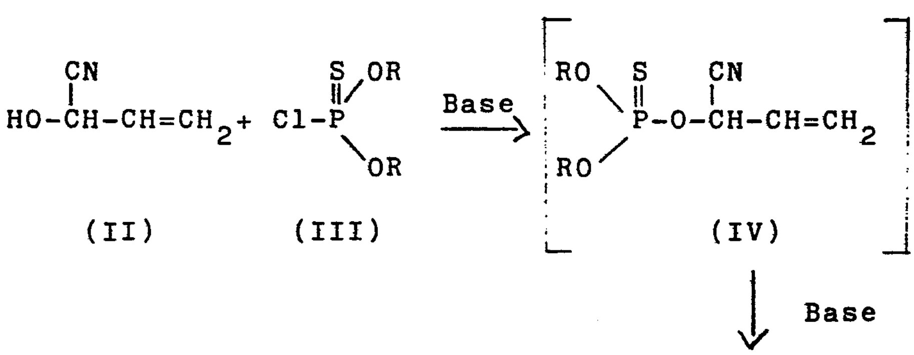


(II) (III) (IV) (I)

In der Formel III hat R die für die Formel I angegebenen Bedeutungen.

1

Die Reaktionen werden bei einer Temperatur zwischen -10° C und +100° C, vorzugsweise zwischen 0° C und 50° C, bei normalem oder leicht erhöhtem Druck und gegebenenfalls in einem inerten Lösungs- oder Verdünnungsmittel durchgeführt.

Als Lösungs- oder Verdünnungsmittel eignen sich z.B. Aether und ätherartige Verbindungen, wie Diäthyläther, Dipropyläther, Dioxan, Dimethoxyäthan und Tetrahydrofuran; Amide, wie N,N-dialkylierte Carbonsäureamide; aliphatische, aromatische sowie halogenierte Kohlenwasserstoffe, insbesondere Benzol, Toluol, Xylole, Chloroform und Chlorbenzol; Nitrile wie Acetonitril; Dimethylsulfoxid und Ketone wie Aceton und Methyläthylketon.

Als Basen kommen insbesondere tertiäre Amine, wie Trialkylamine und Pyridin, ferner Hydroxide, Oxide, Carbonate und Bicarbonate von Alkali- und Erdalkalimetallen sowie Alkalimetallalkoholate, wie z.B. Kalium-t.butylat und Natriummethylat in Betracht.

Die Ausgangsstoffe der Formeln II und III sind bekannt oder können nach bekannten Verfahren hergestellt werden. Die Verbindungen der Formel IV werden nicht isoliert sondern in situ zu I umgesetzt.

Die Verbindungen der Formel I eigenen sich zur Bekämpfung von verschiedenartigen Schädlingen an Tieren und Pflanzen. So können sie zur Bekämpfung von Insekten, z.B. der Ordnung Lepidoptera, Coleoptera, Homoptera, Heteroptera, Diptera, Thysanoptera, Orthoptera, Anoplura, Siphonaptera, Mallophaga, Thysanura, Isoptera, Psocoptera und Hymenoptera und von Milben und Zecken der Ordnung Acarina eingesetzt werden.

Vor allem eignen sich Verbindungen der Formel I zur Bekämpfung von pflanzenschädigenden Insekten, insbesondere pflanzenschädigenden Frassinsekten, in Zier- und Nutzpflanzen, insbesondere in Baumwoll- und Reiskulturen (z.B. Spodoptera littoralis, Heliothis virescens, Nilaparvata lugens, Chilo suppressalis und Laodelphax) sowie Gemüse- und Obstkulturen (z.B. Leptinotarsa decemlineata, Myzus persicae, Laspeyresia pomonella und Adoxophyes reticulana) und von Bodeninsekten (z.B. Aulacophora femoralis, Chortophila brassicae, Diabrotica balteata, Pachnoda savignyi und Scotia ypsilon).

Wirkstoffe der Formel I zeigen auch eine sehr günstige Wirkung gegen Fliegen, wie Musca domestica, sowie gegen Mückenlarven und gegen ektoparasitäre Milben und Zecken, z.B. der Familien Ixodidae, Argasidae und Dermanyssidae. Daneben zeichnen sich die Verbindungen der Formel I durch eine breite ovizide und ovolarvizide Wirkung aus.

Die akarazide bzw. insektizide Wirkung läßt sich durch Zusatz von anderen Insektiziden und/oder Akariziden wesentlich verbreitern und an gegebene Umstände anpassen. Als Zusätze eignen sich z.B. andere organische Phosphorverbindungen; Nitrophenole und deren Derivate; Formamidine; Harnstoffe; sowie pyrethrinartige Verbindungen sowie Karbamate und chlorierte Kohlenwasserstoffe.

Mit besonderem Vorteil werden Verbindungen der Formel I auch mit Substanzen kombiniert, welche einen synergistischen oder verstärkenden Effekt ausüben. Beispiele solcher Verbindungen sind u.a. Piperonylbutoxid, Propinyläther, Propinyloxime, Propinylcarbamate und Propinylphosphonate, 2-(3,4-Methylendioxyphenoxy)-3,6,9-trioxaundecan (Sesamex resp. Sesoxane), S,S,S-Tributylphosphorotrithioate, 1,2-Methylendioxy-4-(2-(octylsulfinyl)-propyl)-benzol.

Die Verbindungen der Formel I werden in unveränderter Form oder vorzugsweise zusammen mit den in der Formulierungstechnik üblichen Hilfsmitteln eingesetzt und werden daher z.B. zu Emulsionskonzentrationen, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Verstreuen oder Gießen werden gleich wie die Art der Mittel den angestrebten Zielen und den gegebenen Verhältnissen entsprechend gewählt.

Die Formulierungen, d.h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl, oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen, wie Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie die Na- oder K-Salze der Oel- oder Stearinsäure, oder von natürlichen Fettsäuregemischen, die z.B. aus Kokosnuss- oder Talgöl gewonnen werden können. Ferner sind auch die Fettsäuremethyl-taurinsalze geeignet.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschließt, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäure von Fettalkohol-Aethylenoxid-Addukten. Die sulfonierten Benzimidazolderivate enthalten vorzugsweise 2 Sulfonsäuregruppen und einen Fettsäurerest mit 8 - 22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate z.B. Salze des Phosphorsäureesters eines p-Nonylphenol-(4-14)-Aethylenoxid-Adduktes und Phospholipide in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxid-Addukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglycoläther, Polypropylen-Polyäthylenoxid-Addukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)-äthylammoniumbromid.

Die in der Formulierungstechnik gebräuchlichen Tenside sind u.a. in folgenden Publikationen beschrieben: "McCutcheon's Detergents and Emulsifiers Annual" MC Publishing Corp., Ridgewood, New Jersey, 1979; Dr. Helmut Stache "Tensid Taschenbuch", Carl Hanser Verlag München/ Wien 1981.

Die pestiziden Zubereitungen enthalten in der Regel 0,1 bis 99 Gew.%, insbesondere 0,1 bis 95 Gew.%, Wirkstoff der Formel I, 1 bis 99,9 Gew.% eines festen oder flüssigen Zusatzstoffes und 0 bis 25 Gew.%, insbesondere 0,1 bis 25 Gew.%, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Formulierungsbeispiele für flüssige Wirkstoffe der Formel I
(% = Gewichtsprozent)

| 1. Emulsions-Konzentrate | a) | b) | c) |
|---|---|---|---|
| Wirkstoff | 25 % | 40 % | 50 % |
| Ca-Dodecylbenzolsulfonat | 5 % | 8 % | 6 % |
| Ricinusöl-polyäthylenglykol-äther (36 Mol AeO) | 5 % | - | - |
| Tributylphenol-polyäthylen-glykoläther (30 Mol AeO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 2. Lösungen | a) | b) | c) | d) |
|---|---|---|---|---|
| Wirkstoff | 80 % | 10 % | 5 % | 95 % |
| Aethylenglykol-mono-methyläther | 20 % | - | - | - |
| Polyäthylenglykol MG 400 | - | 70 % | - | - |
| N-Methyl-2-pyrrolidon | - | 20 % | - | - |
| Epoxidiertes Kokosnussöl | - | - | 1 % | 5 % |
| Benzin (Siedegrenzen 160-190°C) | - | - | 94 % | - |

Die Lösungen sind zur Anwendung in Form kleinster Tropfen geeignet.

3. Granulate

| | a) | b) |
|---|---|---|
| Wirkstoff | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschließend im Vakuum abgedampft.

4. Stäubemittel

| | a) | b) |
|---|---|---|
| Wirkstoff | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemittel.

Formulierungsbeispiele für feste Wirkstoffe der Formel I
(% = Gewichtsprozent)

5. Spritzpulver

| | a) | b) | c) |
|---|---|---|---|
| Wirkstoff | 20 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyäthylenglykoläther (7-8 Mol AeO) | - | 2 % | - |
| Hochdisperse Kieselsäure | 5 % | 10 % | 10 % |
| Kaolin | 67 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

6. Emulsions-Konzentrat

| | |
|---|---|
| Wirkstoff | 10 % |
| Octylphenolpolyäthylenglykoläther (4-5 Mol AeO) | 3 % |
| Ca-Dodecylbenzolsulfonat | 3 % |
| Ricinusölpolyglykoläther (36 Mol AeO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| 7. Stäubemittel | a) | b) |
|---|---|---|
| Wirkstoff | 5 % | 8 % |
| Talkum | 95 % | - |
| Kaolin | - | 92 % |

Man erhält anwendungsfertige Stäubemittel, indem der Wirkstoff mit dem Träger vermischt und auf einer geeigneten Mühle vermahlen wird.

8. Extruder Granulat

| | |
|---|---|
| Wirkstoff | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschließend im Luftstrom getrocknet.

9. Umhüllungs-Granulat

| | |
|---|---|
| Wirkstoff | 3 % |
| Polyäthylenglykol (MG 200) | 3 % |
| Kaolin | 94 % |

Der feingemahlene Wirkstoff wird in einem Mischer auf das mit Polyäthylenglykol angefeuchtete Kaolin gleichmäßig aufgetragen. Auf diese Weise erhält man staubfreie Umhüllungs-Granulate.

10. Suspensions-Konzentrat

| | |
|---|---|
| Wirkstoff | 40 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37%ige wässrige Formaldehyd-Lösung | 0,2 % |
| Silikonöl in Form einer 75%igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

<u>Beispiel 1:</u> Herstellung der Verbindung der Formel

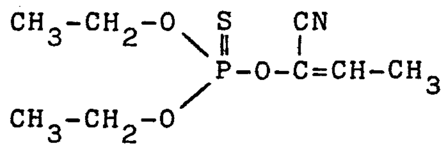

In eine Lösung von 37,35 g (0,45 Mol) Acroleincyanhydrin in 100 ml Acetonitril werden bei 5 - 10° C 84,8 g (0,45 Mol) O,O-Diethylthiophosphorsäurechlorid zugegeben und anschließend auf 50° C erwärmt. Bei dieser Temperatur läßt man 50,5 g (0,5 Mol) Triethylamin über einen Zeitraum von etwa 5 Stunden zutropfen. Nach der Zugabe wird noch 30 Minuten nachgerührt, auf Raumtemperatur abgekühlt und mit 300 ml Diethylether versetzt. Das Gemisch wird 2 mal mit 5%iger Salzsäure und anschließend 2 mal mit Wasser gewaschen, mit Natriumsulfat getrocknet und im Vakuum vom Lösungsmittel vollständig befreit. Es bleibt ein gefärbtes Öl zurück. Ausbeute: 75 g (70,9 % d.Th.).

Das Produkt destilliert bei 1 mbar bei etwa 130 - 135° C unter starker Zersetzung.

$^{1}$H-NMR($CDCl_3$): $\delta_{OCH_2CH_3}$: 1,36 (t); $\delta_{OCH_2-CH_3}$: 4,25 (mq)

$\delta_{=CH}$: 6,12 (cis, trans: d); $\delta_{CH_3}$: 1,8 (cis, trans: d)

Beispiel 2: Herstellung der Verbindung der Formel

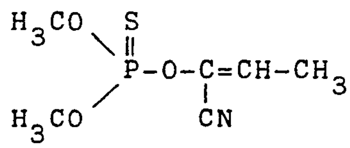

In eine Lösung von 37,35 g (0,45 Mol) Acroleincyanhydrin in 100 ml Methylenchlorid werden bei 5 - 10° C 36,1 g (0,225 Mol) 0,0-Dimethylthiophosphorsäurechlorid zugegeben und anschließend zum Sieden erhitzt. Über einen Zeitraum von etwa 3 Stunden läßt man 22,7 g (0,225 Mol) Triethylamin zutropfen. Nach Abkühlung auf Raumtemperatur wird 3 mal mit 50 ml Wasser ausgewaschen, mit Natriumsulfat getrocknet und das Methylenchlorid im Vakuum abgezogen. Der Rückstand wird mit 100 ml Toluol aufgenommen und mit 5 ml Triethylamin versetzt. Das Gemisch wird 4 Stunden unter Rückfluß erhitzt. Nach Abkühlung auf Raumtemperatur wird mit 50 ml 5%iger Salzsäure und 2 mal mit 50 ml Wasser ausgewaschen, mit Natriumsulfat getrocknet und das Lösungsmittel im Vakuum vollständig entfernt. Es bleibt ein Öl 38,5 g (82,6 % d.Th.) zurück.

$^1$H-NMR($CDCl_3$) : $\delta$= CH : 6,18 (cis,trans:q)
$\delta$= $CH_3$ : 1,9 (cis,trans:d)
$\delta$= $OCH_3$ : 3,8

Beispiel 3: Herstellung der Verbindung der Formel

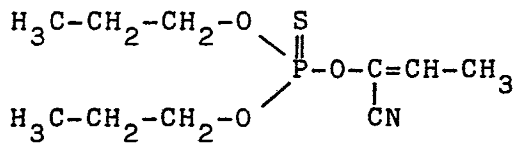

In eine Lösung von 37,35 g (0,45 Mol) Acroleincyanhydrin in 100 ml Methylenchlorid werden bei 5 - 10° C 48,7 g (0,225 Mol) O,O-Di-n-propylthiophosphorsäurechlorid zugegeben und anschließend zum Sieden erhitzt. Über einen Zeitraum von etwa 3 Stunden läßt man 22,7 g (0,225 Mol) Triethylamin zutropfen. Nach Abkühlung auf Raumtemperatur wird 3 mal mit 50 ml Wasser ausgewaschen, mit Natriumsulfat getrocknet und das Methylenchlorid im Vakuum abgezogen. Der Rückstand wird mit 100 ml Methyl-tert.-butylether aufgenommen und mit 5 ml Triethylamin versetzt. Das Gemisch wird 5 Stunden unter Rückfluß erhitzt. Nach Abkühlung auf Raumtemperatur wird mit 50 ml 5%iger Salzsäure und 2 mal mit 50 ml Wasser ausgewaschen, mit Natriumsulfat getrocknet und das Lösungsmittel im Vakuum vollständig entfernt. Es bleibt ein Rückstand von 47,6 g (80,4 % d.Th.).

$^1$H-NMR:($CDCl_3$): $\delta$=CH : 6,1 (cis,trans : q)

$\delta$=$CH_3$ : 1,8 (cis,trans : d)

Beispiel 4: Insektizide Fraßgift-Wirkung: Spodoptera littoralis

Baumwollpflanzen werden mit einer Versuchslösung, enthaltend 400 ppm der zu prüfenden Verbindung, besprüht.

Nach dem Antrocknen des Belages werden die Pflanzen mit Larven von Spodoptera littoralis (L3-Stadium) besetzt. Man verwendet pro Versuchsverbindung und pro Test-Spezies zwei Pflanzen. Die Auswertung der erzielten Abtötungsrate erfolgt nach 2, 4, 24 und 48 Stunden. Der Versuch wird bei 28° C und 60 % relativer Luftfeuchtigkeit durchgeführt.

Verbindungen gemäß den Beispielen 1 bis 3 zeigen im obigen Test 100%ige Wirkung gegenüber Spodoptera littoralis-Larven.

Beispiel 5: Wirkung gegen Diabrotica balteata

750 ml Komposterde werden mit 150 ml Testlösung enthaltend 3 ppm Wirkstoff gemischt. Mit der behandelten Erde werden Maiskeimlinge in Plastiktöpfe eingetopft (4 Keimlinge pro Topf mit einem Durchmesser von 10 cm). Die Töpfe werden unmittelbar nachher mit 10 L3-Larven von Diabrotica balteata infestiert. Die Kontrolle wird 10 Tage nach dem Einsetzen der Larven durchgeführt.

Verbindungen gemäß den Beispielen 1 bis 3 zeigen im obigen Test 100%ige Wirkung gegen L3-Larven von Diabrotica balteata.

Beispiel 6: Insektizide Fraßgift-Wirkung: Nilaparvata lugens

Reispflanzen werden mit einer Versuchslösung, enthaltend 50 ppm der zu prüfenden Verbindung, besprüht. Nach dem Antrocknen des Belages werden die Pflanzen mit Larven von Nilaparvata lugens (L3-Stadium) besetzt. Man verwendet pro Versuchsverbindung und pro Test-Spezies zwei Pflanzen. Die Auswertung der erzielten Abtötungsrate erfolgt nach 24 Stunden. Der Versuch wird bei 22° C und 60 % relativer Luftfeuchtigkeit durchgeführt.

Verbindungen gemäß den Beispielen 1 bis 3 zeigen im obigen Test 100 % Wirkung gegenüber Nilaparvata lugens-Larven.

17.10.1984
PAT/Dr.No-hm

Patentansprüche:

1. O-1-Cyano-1-propenylthiophosphorsäureester der Formel

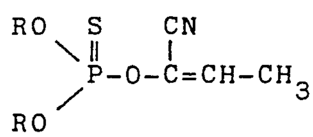

(I)

in der R eine gegebenenfalls verzweigte Alkylgruppe mit 1 - 4, vorzugsweise 2, C-Atomen bedeutet.

2. Verfahren zur Herstellung von Verbindungen gemäß Anspruch 1, dadurch gekennzeichnet, daß man die Verbindung der Formel

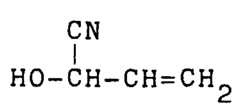

(II)

in Gegenwart einer Base mit einer Verbindung der Formel

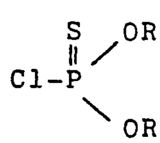

(III)

in der R die in Anspruch 1 angegebenen Bedeutungen hat, umsetzt.

3. Schädlingsbekämpfungsmittel, dadurch gekennzeichnet, daß es als aktive Komponente eine Verbindung gemäß Anspruch 1 und in der Formulierungstechnik übliche Hilfsmittel enthält.

4. Verwendung einer Verbindung gemäß Anspruch 1 zur Bekämpfung von verschiedenartigen Schädlingen an Tieren und Pflanzen sowie im Boden.

5. Verwendung gemäß Anspruch 4 zur Bekämpfung von Isekten und Vertretern der Ordnung Akarina.

6. Verfahren zur Bekämpfung von verschiedenartigen Schädlingen an Tieren und Pflanzen sowie im Boden, dadurch gekennzeichnet, daß man eine Verbindung gemäß Anspruch 1 auf die Tiere und Pflanzen oder auf den Boden appliziert.

0182108

Europäisches Patentamt

# EUROPÄISCHER RECHERCHENBERICHT

Nummer der Anmeldung

EP 85 11 3277

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DIE PHARMAZIE, Band 36, Nr. 6, Juni 1981, Seiten 448-449; P.P. MAGER: "Branching in structure-toxicity relationships applied to organophosphorus pesticides of the DDVP (Dichlorvos) type: a novel phenomenon in QSAR" * Insgesamt * --- | 1,3-6 | C 07 F 9/173<br>A 01 N 57/12 |
| Y | FR-A-1 584 116 (AMERICAN CYANAMID CO.) * Seite 1, Zeilen 1-21; Beispiele 1,3,5,7 * ----- | 1,3-6 | |
| | | | RECHERCHIERTE SACHGEBIETE (Int Cl.4) |
| | | | C 07 F 9/00 |

Der vorliegende Recherchenbericht wurde für alle Patentansprüche erstellt.

| Recherchenort | Abschlußdatum der Recherche | Prüfer |
|---|---|---|
| DEN HAAG | 29-01-1986 | BESLIER L.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82